# EUROPÄISCHE PATENTANMELDUNG

(11) **EP 0 690 026 A2**
(43) Veröffentlichungstag der Anmeldung: **03.01.1996**
(21) Anmeldenummer: 95109707.0
(22) Anmeldetag: 22.06.1995
(51) Int. Cl.: C02F 11/14

(54) **Verfahren zur Filtration und Entwässerung von Klärschlämmen**

(30) Priorität: 01.07.1994 DE 4423143
(71) Anmelder: BASF Aktiengesellschaft, D-67063 Ludwigshafen (DE)
(72) Erfinder: Bröckel, Ulrich, Dr., D-67251 Freinsheim (DE); Römer, Rainer, Dr., D-69514 Laudenbach (DE); Meyer, Joachim, Dr., D-67133 Maxdorf (DE); Mittelstrass, Axel, D-69121 Heidelberg (DE); Witt, Reiner, D-68789 St. Leon-Rot (DE); Schubert, Erich, D-67098 Bad Dürkheim (DE); Blei, Peter, D-67098 Bad Dürkheim (DE); Fessler, Jürgen, D-67229 Laumersheim (DE)

(57) **Zusammenfassung**

Verfahren zur Filtration und Entwässerung von Klärschlämmen (1) in einer Membranfilterpresse (9), bei dem Klärschlamm (1), gegebenenfalls mit Zuschlagstoffen (2), wie Kohle oder Asche, unter Zugabe eines Flockungshilfsmittels, z.B. einem organischen Polymer, in einem Kontaktwerk (3) vermischt und geflockt und über eine Pumpe (4) der Membranfilterpresse (9) zugeführt wird, dadurch gekennzeichnet, daß der, gegebenenfalls mit Zuschlagstoffen (2), versetzte Klärschlamm (1) über eine Leitung (5) einem Zylinderrührer (7) mit rotierenden, im Durchmesser über die Zylinderlänge veränderten Zylinderdurchmessern, vorzugsweise mit abgestuften Zylindern (7a, 7b, 7c), zugeführt wird, das Flockungshilfsmittel über eine Leitung (6) in den Zylinderrührer (7) eingeführt wird, daß unter angepaßten Schergefällen bzw. Energieeinträgen zunächst der gegebenenfalls mit Zuschlagstoffen (2) versetzte Klärschlamm (1) und das Flockungshilfsmittel im ersten Bereich (7a) intensiv durchmischt, dann im Zylinder mit einem geringeren Durchmesser (7b) gezielt die Flocke aufgebaut und die Flocke abschließend, im Bereich des letzten Zylinders (7c), mechanisch stabilisiert, und der so geflockte Klärschlamm (1) über eine Ableitung (8) der Membranfilterpresse (9) zugeführt wird.

## Beschreibung

Die vorliegende Erfindung betrifft ein Verfahren zur Filtration und Entwässerung von Klärschlämmen unter Nutzung eines Zylinderrührers zum kontinuierlichen Rühren, Mischen, Agglomerieren und/oder Flocken von wenigstens zwei Komponenten.

Als Komponenten können angesehen werden: Klärschlamm, Flockungshilfsmittel, Filterhilfsmittel wie Asche oder Kalk oder Energieträger wie z.B. Kohle.

Ein wirtschaftlicher Betrieb der Kläranlage und eine wirtschaftliche Verbrennung ist nur durch eine effiziente Entwässerung des Filterkuchens möglich. Für eine effiziente Entwässerung sind Klärschlammflocken mit konstant niedrigen Filterwiderständen, d.h. guten Filtrationseigenschaften, zwingend erforderlich. Weiter muß die Wasserbeladung des Filterkuchens (kg Wasser/kg Schlammtrockensubstanz) möglichst geringe Werte annehmen, um die Menge des zu handhabenden Filterkuchens zu minimieren und den für einen selbstgängig brennenden Filterkuchen notwendigen, kostenintensiven Zusatz von Kohle als Primärenergieträger zu reduzieren, gegebenenfalls ganz zu unterbinden.

Aus den europäischen Patentschriften 53250 und 53251 sind Verfahren bekannt, in denen die Entwässerung von Klärschlämmen auf Filterpressen beschrieben ist. Bei diesen Verfahren werden Klärschlämme mit Zuschlagstoffen, wie feinteiligen Kohlen oder Aschen oder deren Gemische, in einer Menge von 0.5 - 1.5 Teile je Teil Schlammtrockensubstanz zugesetzt und mit organischen Flockungshilfsmitteln in einer Menge von 3 - 8 kg je t Schlammtrockensubstanz vermischt und anschließend durch eine Druckfiltration auf Filterpressen entwässert.

Die zugegebene Asche wirkt als Filterhilfsmittel und verbessert das Ablöseverhalten des Filterkuchens vom Filtertuch. Die Kohlezugabe ist notwendig, damit der Filterkuchen in Wirbelschichtöfen ohne Stützfeuerung selbstgängig brennt.

Bekannt ist ferner, daß in Zylinderrührern kontinuierlich gemischt bzw. geflockt werden kann (Der Zylinderrührer - ein neuer Flokkulationsreaktor hoher Leistungsdichte für die Wasseraufbereitung, M. Reiter et al. CIT 56, 1984, Nr. 4).

Nachteilig ist, daß bei einer Flockung im Kontaktwerk oder in einem Rührkessel, der Energieeintrag inhomogen ist und sich daher in Gebieten unterschiedlich intensiver Durchmischung Flocken mit unterschiedlichen Filtrationseigenschaften bilden. Werden diese Flocken durch Pumpen im Saugbetrieb abgezogen, so kommt es in der Pumpe zu starken Belastungen der Flocken, wodurch die Flocken teilweise zerstört werden. In Folge dieser Beeinträchtigungen steigt der Filterwiderstand an, die Filtrationsgeschwindigkeit sinkt ab und die Wasserbeladung steigt an. Die Flockung des Klärschlamms auf der Druckseite der Pumpen, z.B. in statischen Mischern, vermeidet diesen Nachteil. Da sich jedoch der Schlammvolumenstrom während der Pressenbefüllung um den Faktor 1:10 bis 1:20 reduziert, kann über den gesamten Volumenstrombereich keine konstante Flockenqualität erzeugt werden. Schwankende Filterwiderstände sind die Folge, die zu einer langsameren und geringeren Pressenfüllung mit höheren Wasserbeladungen des Filterkuchens führen. Der erhöhte Filterwiderstand erfordert den Zusatz von Asche als Filterhilfsmittel, die höhere Wasserbeladung erzwingt einen entsprechenden Kohlezusatz, um einen selbstgängig brennenden Filterkuchen zu erhalten.

Aufgabe der Erfindung war es, ein Verfahren zu entwickeln, mit dem ein selbstgängig brennender Filterkuchen mit einem Minimum an Zuschlagstoffen erzeugt wird, um einen effizienten Betrieb der Filterpressen durch eine schnelle, sichere Befüllung der Filterpressen zu ermöglichen.

Diese Aufgaben werden erfindungsgemäß durch die Merkmale der Patentansprüche 1 bis 13 gelöst, indem insbesondere
- eine Druckflockung von mit Kohle vermischtem Klärschlamm mit dem Flockungshilfsmittel auf der Druckseite der Pumpe durchgeführt wird,
- daß die Druckflockung in einem regelbaren Zylinderrührer erfolgt,
- daß die Entwässerung in einer Membranfilterpresse durchgeführt wird und
- der so erhaltene Filterkuchen in Wirbelschichtöfen verbrannt wird.

Unter Klärschlämmen sollen verstanden werden, Primärschlämme, die in der Vorklärstufe einer Kläranlage durch Sedimentation der Schlammfeststoffe erhalten werden, Belebtschlämme, die als Überschußschlämme laufend aus biologischen Kläranlagen ausgeschleust werden, Mischschlämme, die durch Vermischen von Belebtschlamm und Primärschlamm entstehen und Faulschlämme. Diese Schlämme können kommunaler, industrieller oder gemischter Herkunft sein.

Der Feststoffgehalt solcher Schlämme liegt im allgemeinen zwischen 0.5 bis 8 Gew.%. Bei Anwendung organischer Flockungshilfsmittel bereits bei der Schlammeindickung liegen die Schlammfeststoffgehalte höher.

Flockungshilfsmittel werden in Form 0.05 bis 0.2 %iger wäßriger Lösungen eingesetzt. Die Herstellung solcher Lösungen aus den festen und flüssigen Handelsprodukten erfolgt nach den bekannten Methoden in handelsüblichen Verrichtungen.

Die erforderlichen Flockungshilfsmittelmengen liegen im Bereich von 1 bis 10 kg Flockungshilfsmittel/t Schlammtrockensubstanz, vorzugsweise bei 4 - 5 kg.

Kohle und Asche werden in Mengen von bis zu 0.6 Teile Kohle und 0.8 Teile Asche je Teil Schlammtrockensubstanz dem Klärschlamm zugemischt.

Erfindungsgemäß wird die Druckflockung so durchgeführt, daß eine effizientere Befüllung der Presse ermöglicht wird, der Einsatz von Asche gänzlich vermieden und mit einem reduzierten Einsatz an Kohle und Flockungshilfsmittel zu einem selbstgängig brennenden Filterkuchen gelangt wird.

Grundlage für eine verbesserte Abtrennung in Filterpressen ist eine mechanisch stabile Flocke mit einem möglichst niedrigen Filterwiderstand über den gesamten Befüllzyklus. Durch eine Druckflockung wird eine Beanspruchung durch Förderorgane ausgeschlossen, da die Pumpen vor dem Flockungsreaktor installiert sind. Für einen gezielten Aufbau der Flocken wird erfindungsgemäß ein Zylinderrührer eingesetzt. Im Zylinderrührer werden kontinuierlich die verfahrenstechnischen Operationen, intensives Durchmischen im engsten Ringspalt, Aufbau der Flocken unter einer reduzierten Belastung im sich erweiternden Ringspalt und abschließend das Stabilisieren der Flocke unter einer weiter reduzierten Beanspruchung durchgeführt.

Ein Ausführungsbeispiel der Erfindung wird nachfolgend anhand der Zeichnungen erläutert. Die Zeichnungen zeigen in
- Fig. 1: das Verfahrensschema mit der erfindungsgemäßen Ausführung eines Zylinderrührers,
- Fig. 2: den Einfluß der Ringspaltabmessungen auf den Filterwiderstand,
- Fig. 3: den Drehzahlverlauf über dem Durchsatz für konstante Filterwiderstände.

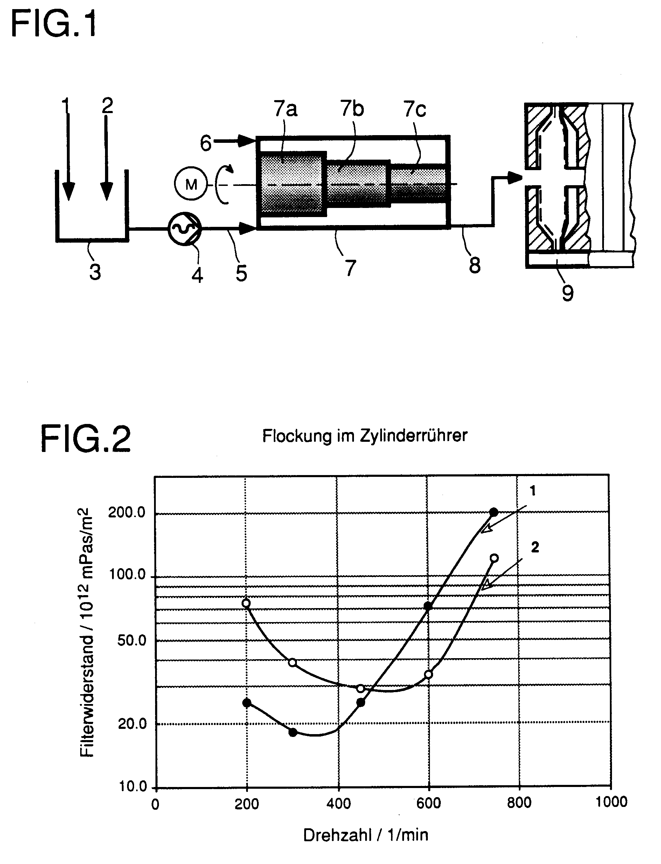

Gemäß Figur 1 werden Klärschlamm 1 und Zuschlagstoffe 2, wie Kohle, in einem Kontaktwerk 3 vermischt und über eine Pumpe 4 und eine Leitung 5 in einen Zylinderrührer 7 eingebracht. Über eine Leitung 6 wird das Flockungshilfsmittel eingebracht, dessen Menge, bei einem vorgegebenen Verhältnis (kg Flockungshilfsmittel/t STS), dem aktuellen Schlammvolumenstrom angepaßt wird.

Im engsten Ringspalt, d.h. dem Abstand zwischen Innenzylinder und feststehendem Außenmantel, im Bereich des Zylinders 7a findet die intensive Durchmischung der beiden Komponenten aus Leitung 5 und 6 statt. Anschließend, im sich erweiternden Ringspalt 7b bilden sich Flocken aus, die im größten Ringspalt 7c mechanisch verdichtet werden. Über eine Leitung 8 gelangen die Flocken in eine Membranfilterpresse 9.

Besonders geeignet war es für die Klärschlammflockung, die Leitungen 5 und 6 nicht axial, sondern radial an dem Zylinderrührer 7 anzubringen. Der Zylinder 7a wirkt dabei als Prallplatte. Die Mischwirkung wird so weiter gesteigert und ein "Durchschießen" der Komponenten aus Leitung 5 und 6 in Richtung der Ableitung 8 wirksam verhindert.

Die relative Verweilzeit in den einzelnen Beanspruchungsniveaus ist über die Länge des Ringspaltes bei unveränderter Abmessung definiert, während sich die absolute Verweilzeit aus dem Volumen des Verfahrensraumes und dem Durchsatz ergibt. Bei einem maximalen Durchsatz von 45 m³/h lag die minimale absolute Verweilzeit bei 0.8 sec. Als geeignete Ringspaltabstufung hat sich eine Erweiterung von 4 über 9 auf 16 mm erwiesen, wobei der Außendurchmesser bei 200 mm lag. Das Längenverhältnis der 3 Zylinder wurde mit 1:1:1 festgelegt.

In Figur 2 ist der Filterwiderstand über der Drehzahl des vorstehend definierten Innenzylinders aufgetragen. Ausgehend von einer Drehzahl von 200 Umdrehungen/min nimmt der Filterwiderstand mit zunehmender Drehzahl ab. Er erreicht bei der Kurve 1 (Ringspaltabmessungen: 4 mm, 9 mm, 16 mm) bei einer Drehzahl von n = 350 Umdrehungen/min, sein Minimum. Bei der Kurve 2 mit nur zwei Ringspaltabmessungen (9 mm, 9 mm, 16 mm) liegt das Minimum des Filterwiderstandes bei n = 500 Umdrehungen/min. Erhöht man die Drehzahl weiter, so steigt der Energieeintrag so weit an, daß die gebildeten Flocken wieder zerstört werden, d.h. der Filterwiderstand nimmt wieder zu. Deutlich zeigt der Vergleich der Kurve 1 mit der Kurve 2 die Einwirkung der Spaltgeometrie auf den Filterwiderstand. Erweitert man den Spalt in drei Stufen (Kurve 1), so liegt der minimale Filterwiderstand um den Faktor 2 unter dem der Kurve 2. Bedingt durch den engsten Spalt von 4 mm (Kurve 1) wird eine intensivere Durchmischung der beiden Komponenten erzielt, als es bei einem Anfangsspalt von 8 mm der Fall ist. Eine der Problemstellung angepaßte Spaltgeometrie stellt somit die Grundlage für minimale Filterwiderstände dar.

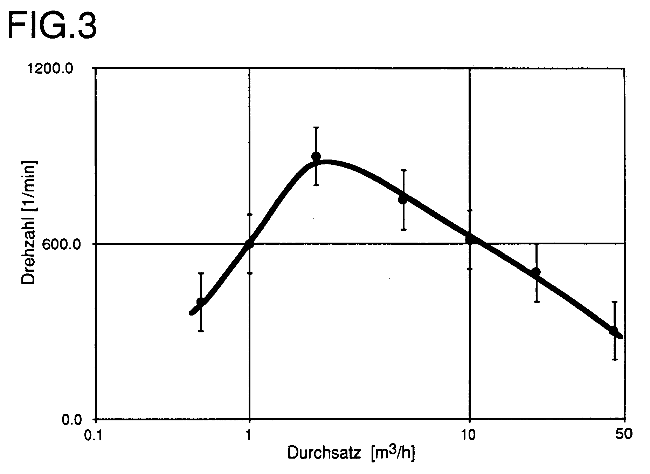

Figur 3 zeigt die Abhängigkeit der Drehzahl vom Volumenstrom zur Erzeugung eines minimalen Filterwiderstandes. Durch die gezielte Anpassung der Drehzahl des Innenzylinders wurde über einen Regelbereich von 0.5 m³/h bis zu 45 m³/h ein Filterwiderstand von ca. 12*10⁺¹² mPas/m² erzielt.

Als Filterpressen zur Entwässerung der Klärschlammflocken kommen Kammerfilterpressen, Rahmenfilterpressen oder Membranfilterpressen in Betracht. Auf diesen Filterpressen wird diskontinuierlich mit Kuchenstärken von 20 bis 40 mm gearbeitet. Die Filtrationszeiten liegen bei 90 bis 180 min, die Preßdrücke bei bis zu 15 bar.

Bei der erfindungsgemäßen Nutzung von Membranfilterpressen in Verbindung mit einer Druckflockung und optimalen Flocken mit niedrigen Filterwiderständen kann auf den Aschezusatz als Filterhilfsmittel vollständig verzichtet werden. Durch das Nachpressen in der Membranfilterpresse wird die Wasserbeladung nahezu halbiert. Folglich kann der Kohlezusatz um 33 bis zu 66 % auf ca. 0.2 Teile je Teil STS reduziert werden. Aufgrund der optimalen Durchmischung von Klärschlamm und Sedipur verringert sich die notwendige Flockungshilfsmittelmenge um ca. 33 % auf ca. 3 kg/t STS. Nachteile beim Ablöseverhalten des Filterkuchens wurden trotz der deutlichen Reduktion der Zuschlagstoffe nicht festgestellt. Für einen völligen Verzicht auf einen Energieträger als Zuschlagstoff muß die Nachpreßzeit in Membranfilterpressen so weit erhöht werden, daß der Filterkuchen einen Heizwert von ca. 4600 kJ/kg aufweist; er ist in diesem Fall selbstgängig brennend.

Als besondere Vorteile des erfindungsgemäßen Verfahrens sind die deutliche Reduktion der Zuschlagstoffe (Asche und Kohle), die Verminderung der notwendigen Flockungshilfsmittelmenge bei gleichzeitiger Verbesserung der Filtrationseigenschaften bzw. der Filtrationsgeschwindigkeit. Durch die Verminderung der Zuschlagstoffe und durch die geringere Wasserbeladung reduziert sich die zu handhabende Filterkuchenmenge auf ca. 50 %. Dadurch erhöht sich die Kapazität bzw. der Verschleiß der produktberührenden Anlagenteile nimmt ab.

Nachfolgend wird die Erfindung anhand von Beispielen näher erläutert. Bei den Beispielen wurde ein Mischschlamm aus einer mechanisch-biologischen Kläranlage verwendet, der zu 90 % aus Belebtschlamm und zu ca. 10 % aus Primärschlamm besteht.

Als feinteilige Kohle wurden Flotationskohlekonzentrate mit einem unteren Heizwert von 29.330 kJ/kg eingesetzt.

Bei der in Vergleichsversuchen eingesetzten Asche handelt es sich um Flugasche aus der Verbrennung eines mit Flotationskohle konditionierten und entwässerten Mischschlamms.

### Beispiel 1

Dieses Beispiel zeigt die Vorteile einer Druckflockung im Vergleich zur Saugflockung auf.

In einem 160-l-Rührkessel mit einem Durchmesser von 690 mm wurden 100 l Mischschlamm mit einem STS-Gehalt von 5 % vorgelegt und mit 0.3 Teilen Kohle je Teil STS vermischt. Dieses Gemisch wurde anschließend mit 0.1 %iger wäßriger ®Sedipurlösung in einem Mengenanteil von 5 kg ®Sedipur/t STS vermischt.

Als Rührorgan wurde ein 3-blättriger Rührer mit einem Durchmesser von 230 mm verwendet. Die Drehzahl betrug 70 Umdrehungen/min.

Der geflockte Schlamm wurde auf eine 1 m² Membranfilterpresse mit einem maximalen Fülldruck von 4 bar innerhalb von 10 min aufgegeben und unter einer Druckerhöhung der Membranen von 0 auf 15 bar innerhalb von 30 min nachentwässert. Durch die Druckbegrenzung während der Befüllung sinkt der Volumenstrom mit zunehmendem Füllgrad der Membranfilterpresse ab.

Bei der Saugflockung, d.h. der geflockte Klärschlamm wird durch eine Exzenterschnecken-(Mohno)pumpe aus dem Rührkessel abgesaugt, erhält man eine Filterflächenbeladung von 2.0 kg STS m² Filterfläche. Der Filterwiderstand der Klärschlammflocken im Rührkessel liegt bei 18*10⁺¹² mPas/m². Nach der Mohnopumpe erreicht er 500*10⁺¹² mPas/m², um am Ende des Füllprogrammes durch die Belastung in der Mohnopumpe bei 4 bar Werte von 1850*10⁺¹² mPas/m² zu erreichen, eine Verschlechterung um ca. 2 Zehnerpotenzen.

Simuliert man eine Druckflockung, d.h. der Rührkessel wird mit Druck beaufschlagt, wodurch der geflockte Klärschlamm in die Membranfilterpresse gelangt, so erhält man eine Filterflächenbeladung von 2.9 kg STS/m² Filterfläche, eine Steigerung um 45 % bei vergleichbaren Randbedingungen.

### Beispiel 2

Dieses Beispiel zeigt im Zusammenhang mit dem erfindungsgemäßen Verfahren den Vergleich von Zylinderrührer mit einem statischen Mischer.

Vorgelegt wurden 5 m³ Klärschlamm in einem Doppelwellenmischer. Über eine Verhältnisregelung wurde bei veränderlichen Schlammdurchsätzen ein vorgegebener Anteil Flockungshilfsmittel (3 kg bzw. 5 kg ®Sedipur/t STS) als 0.1 %ige wäßrige Lösung kontinuierlich zugegeben.

Der Zylinderrührer hatte einen Durchmesser von 200 mm, mit einer Länge von 1000 mm, mit Ringspalten von 10 mm im Einmischbereich, 15 mm im Bereich des Flockenaufbaus und 20 mm bei der mechanischen Stabilisierung, bei einem Längenverhältnis der Abstufungen von 1:1:1. Der statische Mischer, Typ SMF-R, Fa. Sulzer, hatte einen Durchmesser von DN 80 bei einer Länge von 240 mm.

Der Vergleich zeigt folgendes:

| Apparat | Zylinderrührer | stat. Mischer | Zylinderrührer | stat. Mischer |
|---|---|---|---|---|
| Sedipurmenge | 3 kg/t STS | 3 kg/t STS | 5 kg/t STS | 5 kg/t STS |
| Volumenstrom | Filterwiderstände*10⁺¹² | | | |
| 2.5 m³/h | 17 mPas/m² | 200 mPas/m² | 7 mPas/m² | 100 mPas/m² |
| 15 m³/h | 18 mPas/m² | 60 mPas/m² | 10 mPas/m² | 25 mPas/m² |
| 25 m³/h | 17 mPas/m² | 30 mPas/m² | 15 mPas/m² | 25 mPas/m² |

Mit dem Zylinderrührer als Druckflockungsaggregat kann im Vergleich zum statischen Mischer ein konstant niedriger Filterwiderstand über einen Durchsatzbereich von 2.5 m³/h bis 25 m³/h gewährleistet werden.

### Beispiel 3

Dieses Beispiel zeigt den Vergleich einer Saugflockung in Verbindung mit einer Kammerfilterpresse und einer Druckflockung in Verbindung mit einer Membranfilterpresse. Der Klärschlamm hatte einen STS-Gehalt von ca. 5 %. ®Sedipur als Flockungshilfsmittel wurde als 0.1 %ige Lösung zugegeben. Für die Druckflockung wurde der Zylinderrührer als Druckflockungsaggregat eingesetzt. Die Vergleichswerte wurden mit Filterflächen von 2 m x 2 m ermittelt:

| | Kammerfilterpresse | Membranfilterpresse |
|---|---|---|
| Spezifische Beladung | 2.5 kg STS/m² | 3.2 kg STS/m² |
| Fülldruck | 16 bar | 8 bar |
| Preßdruck | - | 15 bar |
| Zykluszeit | 2 h | 2.3 h |
| Kuchenstärke | 30 mm | 20 mm |

| Zusammensetzung | | |
|---|---|---|
| Kohle | 0.5 Teile | 0.1 Teile |
| Asche | 0.8 Teile | 0.0 Teile |
| Schlamm | 1.0 Teile | 1.0 Teile |
| Wasserbeladung | 3 kg H₂O/kg STS | 1.8 kg H₂O/kg STS |
| ®Sedipur | 4.5 kg/t STS | 3.0 kg/t STS |

In beiden Fällen wurde ein selbständig brennender Filterkuchen erzeugt. Im Vergleich zur Kammerfilterpresse steigert sich bei der Kombination Zylinderrührer und Membranfilterpresse die spezifische Beladung um 30 %, als Zuschlagstoff wurden nur noch 0.1 Teile Kohle auf 1 Teil Schlamm benötigt. Die Wasserbeladung sinkt um 40 % und die notwendige Menge an Flockungshilfsmittel (Sedipur®) verringerte sich um 33 %.

### Beispiel 4

Dieses Beispiel zeigt, welche Nachpreßzeiten bei Membranfilterpressen in Abhängigkeit von den Zuschlagstoffen notwendig sind, um einen selbstgängig brennenden Filterkuchen mit ca. 4600 kJ/kg STS zu erzeugen. Der Klärschlamm hatte einen STS-Gehalt von ca. 5 %. Sedipur als Flockungshilfsmittel wurde als 0.1 %ige Lösung in einem Verhältnis von 5 kg Sedipur/t STS zugegeben.

| Zuschlagstoffe (je Teil STS) | Flächenbeladung (kg STS/m²) | Wasserbeladung für 4600 kJ/kg STS (kg Wasser/kg STS) | Nachpreßzeit für 4600 kJ/kg STS (min) |
|---|---|---|---|
| 0.3 Teile Asche | 2.76 | 0.96 | 240 |
| ohne | 3.34 | 1.2 | 175 |
| 0.1 Teile Kohle | 2.96 | 1.55 | 95 |
| 0.3 Teile Kohle | 2.77 | 2.3 | 40 |

Mit Asche als inertem Zuschlagstoff mußte die geringste Wasserbeladung durch die höchste Nachpreßzeit erreicht werden. Ausgehend von keinen zugesetzten Zuschlagstoffen über steigende Anteile an Kohle waren höhere Wasserbeladungen möglich, die mit kürzer werdenden Nachpreßzeiten erzielt wurden. Welche Kombination von Zuschlagstoff und Nachpreßzeit gewählt wird, hängt von den kläranlagenspezifischen Gegebenheiten ab.

## Patentansprüche

1. Verfahren zur Filtration und Entwässerung von Klärschlämmen (1) in einer Membranfilterpresse (9), bei dem Klärschlamm (1), gegebenenfalls mit Zuschlagstoffen (2), wie Kohle oder Asche, unter Zugabe eines Flockungshilfsmittels, z.B. einem organischen Polymer, in einem Kontaktwerk (3) vermischt und geflockt und über eine Pumpe (4) der Membranfilterpresse (9) zugeführt wird, dadurch gekennzeichnet, daß der, gegebenenfalls mit Zuschlagstoffen (2), versetzte Klärschlamm (1) über eine Leitung (5) einem Zylinderrührer (7) mit rotierenden, im Durchmesser über die Zylinderlänge veränderten Zylinderdurchmessern, vorzugsweise mit abgestuften Zylindern (7a, 7b, 7c), zugeführt wird, das Flockungshilfsmittel über eine Leitung (6) in den Zylinderrührer (7) eingeführt wird, daß unter angepaßten Schergefällen bzw. Energieeinträgen zunächst der gegebenenfalls mit Zuschlagstoffen (2) versetzte Klärschlamm (1) und das Flockungshilfsmittel im ersten Bereich (7a) intensiv durchmischt, dann im Zylinder mit einem geringeren Durchmesser (7b) gezielt die Flocke aufgebaut und die Flocke abschließend, im Bereich des letzten Zylinders (7c), mechanisch stabilisiert, und der so geflockte Klärschlamm (1) über eine Ableitung (8) der Membranfilterpresse (9) zugeführt wird.

2. Verfahren nach Anspruch 1 dadurch gekennzeichnet, daß die Flockung auf der Druckseite der Pumpe (4) in dem Zylinderrührer (7) erfolgt,
wobei der Klärschlamm (1) in dem Kontaktwerk (3) mit Zuschlagstoffen (2) von 0.05 bis 0.5, insbesondere 0.1 bis 0.3 Teilen Kohle je Teil Schlammtrockensubstanz (STS) versetzt und mit dem Flockungshilfsmittel in einer Menge von 2 kg bis 10 kg, vorzugsweise 3 kg, je Tonne STS, vermischt wird,
der zur optimalen Flockenbildung notwendige Energieeintrag in Abhängigkeit vom aktuellen Füllvolumenstrom geregelt wird, die zur Flockung notwendige Menge an Filterhilfsmittel ebenfalls an den aktuellen Füllvolumenstrom angepaßt wird, und die Klärschlammflocken anschließend in der Membranfilterpresse (9) so weit entwässert werden, daß ein selbstgängig brennender Filterkuchen entsteht.

3. Verfahren nach Anspruch 1 und 2, dadurch gekennzeichnet, daß der Fülldruck der Membranfilterpresse (9) zwischen 2 bar und 20 bar, vorzugsweise zwischen 4 bar und 8 bar liegt.

4. Verfahren nach Anspruch 1 bis 3, dadurch gekennzeichnet, daß der Preßdruck der Membranfilterpresse (9) zwischen 10 bar und 20 bar, vorzugsweise zwischen 14 bar und 16 bar liegt.

5. Zylinderrührer zum kontinuierlichen Rühren, Mischen, Agglomerieren und/oder Flocken von wenigstens zwei Komponenten, wie Klärschlamm (1) mit dem über die Leitung (6) zugeführten Flockungshilfsmittel, mit wenigstens einer Ableitung (8) für die gebildeten Agglomerate oder Flocken, vorzugsweise zur Durchführung des Verfahrens nach Anspruch 1 bis 4, dadurch gekennzeichnet, daß das kontinuierliche Rühren, Mischen, Agglomerieren und/oder Flocken mit rotierenden, im Durchmesser über die Zylinderlänge veränderten Zylindern, vorzugsweise mit abgestuften Zylindern (7a, 7b, 7c, ...) erfolgt, um so unter angepaßten Schergefällen bzw. Energieeinträgen zunächst die Komponenten aus den Leitungen (5) und (6) im Bereich des Zylinders (7a) intensiv zu durchmischen, dann im Bereich des Zylinders (7b) bei verringertem Durchmesser gezielt die Flocke aufzubauen und diese abschließend im Bereich des Zylinders (7c) mechanisch zu stabilisieren.

6. Zylinderrührer nach Anspruch 5, dadurch gekennzeichnet, daß das Verhältnis der Schergefälle bzw. Energieeinträge in den einzelnen Zylindern (7a, 7b, 7c, ...) durch deren Durchmesser gezielt eingestellt werden kann.

7. Zylinderruhrer nach Anspruch 5 und 6, dadurch gekennzeichnet, daß das Niveau der Schergefälle bzw. Epergieeinträge für die unterschiedlichen verfahrenstechnischen Operationen über eine Drehzahlvariation gleichzeitig für alle Zylinder (7a, 7b, 7c, ...) verändert werden kann.

8. Zylinderrührer nach Anspruch 5 bis 7, dadurch gekennzeichnet, daß nicht die Zylinder (7a, 7b, 7c, ...) in ihrem Durchmesser verändert werden, sondern daß der Innendurchmesser des Außenmantels des Zylinderrührers (7) verändert wird.

9. Zylinderrührer nach Anspruch 5 bis 8, dadurch gekennzeichnet, daß die Oberflächen der Zylinder (7a, 7b, 7c, ...) und/oder des Außenmantels mit einer Struktur versehen werden, um höhere Energieeinträge zu erzielen.

10. Zylinderrührer nach Anspruch 5 bis 9, dadurch gekennzeichnet, daß die Leitungen (5) und (6), sowie die Ableitung (8) sowohl radial als auch axial angebracht werden.

11. Zylinderrührer nach Anspruch 5 bis 10, dadurch gekennzeichnet, daß der Zylinderrührer (7) sowohl waagrecht als auch senkrecht aufgebaut sein kann.

12. Zylinderrührer nach Anspruch 5 bis 11, dadurch gekennzeichnet, daß eine zweistufige Flockung erzielt wird, indem über die Leitung (6) ein Flockungshilfsmittel zur Vorflockung zugeführt wird und über eine weitere Einfüllöffnung zwischen den Zylindern (7a) und (7c), vorzugsweise im letzten Drittel des Zylinders (7a), ein weiteres Flockungshilfsmittel zudosiert wird.

13. Zylinderrührer nach Anspruch 5 bis 12, dadurch gekennzeichnet, daß über die Leitung (6) und die weitere Einfüllöffnung Flockungshilfsmittel mit unterschiedlichen Eigenschaften zugegeben werden, wie kationisch zur Vorflockung und anionisch zur Endflockung.
